# EUROPÄISCHE PATENTSCHRIFT

(11) **EP 3 877 105 B1**
(45) Veröffentlichungstag und Bekanntmachung des Hinweises auf die Patenterteilung: **29.03.2023**
(21) Anmeldenummer: 20735302.0
(22) Anmeldetag: 24.06.2020
(51) Int. Cl.: B21J 15/04, B21K 25/00, F16B 37/06, B21J 15/02

(54) **BEFESTIGUNGSEINHEIT**
FASTENING UNIT
UNITÉ DE FIXATION

(30) Priorität: 25.06.2019 DE 102019117086
(43) Veröffentlichungstag der Anmeldung: 15.09.2021
(73) Patentinhaber: Profil Verbindungstechnik GmbH & Co. KG, 61381 Friedrichsdorf (DE)
(72) Erfinder: DIEHL, Oliver, 61250 Usingen (DE); HEFNER, Austin Gordon Scott, Royal Oak, Michigan 48067 (US); JENE, Tobias, 61381 Friedrichsdorf (DE)
(74) Vertreter: Manitz Finsterwald Patent- und Rechtsanwaltspartnerschaft mbB
(86) Internationale Anmeldenummer: PCT/EP2020/067729
(87) Internationale Veröffentlichungsnummer: WO 2020/260404

(56) Entgegenhaltungen:
- EP-A1- 1 307 316
- EP-A1- 3 095 553
- EP-B1- 1 307 316
- WO-A1-96/07031
- JP-A- 2013 015 161
- US-A- 4 355 531
- US-A1- 2006 159 545

## Beschreibung

Die Erfindung betrifft eine Befestigungseinheit zur Befestigung an einem Werkstück.

In vielen Bereichen, insbesondere im Kraftfahrzeugbereich, ist es erforderlich, die verschiedenartigsten Bauteile miteinander zu verbinden. In vielen Fällen ist es aber nicht möglich, eine direkte Verbindung zwischen den Bauteilen herzustellen. Beispielsweise können diese aufgrund der jeweiligen Materialeigenschaften nicht ohne weiteres miteinander verschweißt werden. Auch direkte Schraubverbindungen können nicht immer realisiert werden, da es die vorliegenden geometrischen Randbedingungen nicht oder nur mit erheblichen Aufwand zulassen. Bei vergleichsweise dünnen Bauteilen, wie etwa Blechteilen, scheiden direkte Schraubverbindungen in der Regel ohnehin aus.

Um die vorstehend beschriebenen Probleme zu umgehen, wird an dem Bauteil oder Werkstück zunächst eine Befestigungseinheit angebracht, beispielsweise durch einen Nietenprozess. Eine derartige Befestigungseinheit weist wiederum einen Funktionsabschnitt auf, der es ermöglicht, eine Verbindung mit anderen Bauteilen oder Werkstücken herzustellen.

Nietprozesse umfassen das Umformen eines Abschnitts der Befestigungseinheit, so dass ein Hinterschnitt erzeugt wird, durch den das Element zuverlässig mit dem Werkstück verbunden wird. Für das Umformen des sog. Nietabschnitts der Einheit wird in der Regel eine Matrize benötigt. Bei dem Befestigungsprozess wird der Nietabschnitt durch ein vorgefertigtes Loch in dem Werkstück oder durch Stanzen durch das Werkstück geführt und auf der Hinterseite des Werkstücks gegen die Matrize gedrückt (beispielsweise durch eine Setzeinrichung), wodurch dieser aufgrund der Formgebung der Matrize verformt wird, um den beschriebenen Hinterschnitt zu bilden.

Derartige Befestigungseinheiten sind grundsätzlich bekannt.

Die JP 2013 015161 A, welche die Basis für den Oberbegriff des Anspruchs 1 bildet, offenbart eine Befestigungseinheit zur Befestigung mehrerer Werkstücke aneinander. Die Befestigungseinheit weist einen ersten und einen zweiten Befestigungsabschnitt auf, welche zunächst mittels eines Stanzabschnitts in die Werkstücke eingebracht und anschließend durch axiales Einpressen des zweiten Befestigungsabschnitts in den ersten Befestigungsabschnitt an dem Werkstück befestigt werden.

Aus der EP 3 095 553 A1 ist ein hohles Nietelement zum Einbringen in ein Werkstück aus einem Verbundwerkstoff bekannt, in das eine axial bezüglich des Nietelements verschiebbare Hilfsspitze eingesetzt ist, mit der ein Loch in dem Werkstück formbar ist.

In der US 4 355 531 A ist ein Befestigungselement mit einem Nietelement und einem Umformstift offenbart, wobei zur Befestigung des Befestigungselements an einem Werkstück das Nietelement durch ein vorgefertigtes Loch in dem Werkstück geführt und durch axiales Einpressen des Umformstifts in das Nietelement umgeformt wird.

Aus der EP 1 307 316 A1 ist ein Funktionselement mit einem Kopf- und einem Schaftteil bekannt, welches mittels des Kopfteils in ein Bauteil eingestanzt und mittels einer Niethülse daran befestigt wird. In einem Übergangsbereich zwischen dem Schaftteil und dem Kopfteil weist das Funktionselement eine Hohlkehle zur Verformung der Niethülse auf. Ein ähnliches Befestigungsprinzip für ein Bolzenelement ist aus der US 2006/0159545 A1 bekannt.

Die WO 96/07031 A1 offenbart ein Nietelement, dessen Nietabschnitt beim Einbringen in ein Bauteil durch einen in dem Nietelement angeordneten kegelförmigen Körper unter Einwirkung einer Matrize umgeformt wird.

Häufig ist es allerdings schon aufgrund der Formgebung des Werkstücks schwierig bis unmöglich, eine Matrize in eine für den Befestigungsprozess geeignete Position zu bringen.

Es ist daher eine Aufgabe der vorliegenden Erfindung, eine Befestigungseinheit zu schaffen, die auch in derartigen Fällen effizient und zuverlässig an dem Werkstück befestigbar ist.

Die Lösung dieser Aufgabe erfolgt mit einer Befestigungseinheit mit den Merkmalen des Anspruchs 1.

Erfindungsgemäß umfasst die Befestigungseinheit ein Nietelement und ein mit dem Nietelement gekoppeltes - bevorzugt verliersicher gekoppeltes - und relativ zu diesem bewegbares Umformelement. Das Nietelement weist einen Nietabschnitt auf und das Umformelement weist einen Umformabschnitt und einen an einem dem Umformabschnitt abgewandten Bereich des Umformelements angeordneten Abstützabschnitt zur axialen Abstützung der Befestigungseinheit an einem Anschlag auf. Der Nietabschnitt und der Umformabschnitt sind derart ausgestaltet, dass der Nietabschnitt bei einer durch eine Einführbewegung erzeugten axialen Relativbewegung zwischen dem Nietelement und dem Umformelement mit dem Umformabschnitt zusammenwirkt und durch diesen in einer radialen Richtung umformbar ist.

Die Relativbewegung der Elemente ist eine Bewegung aufeinander zu. Sie wird erzeugt, wenn der Anschlag eine Einführbewegung des Umformelements abbremst, während das Nietelement noch in Einführrichtung bewegt wird.

Der Abstützabschnitt und der Umformabschnitt sind an gegenüberliegenden Enden des Umformelements angeordnet und voneinander beabstandet.

Der Umformabschnitt wirkt somit als umformende Matrize. Durch die Kopplung, die insbesondere verliersicher ausgestaltet ist, des Nietelements und des Umformelements stellt die Befestigungseinheit letztlich ihre eigene Matrize bereit. Der Nutzer kann daher mit einer vorgefertigten Komponente beliefert werden, die dieser dann ohne Vormontage einsetzen kann. Die Bereitstellung einer separaten, verschleißanfälligen Matrize ist nicht mehr erforderlich. Lediglich ein Anschlag muss vorhanden sein.

Das Nietelement und das Umformelement können separate Bauteile sein. Es ist aber auch beispielsweise denkbar, dass die beiden Elemente einstückig miteinander verbunden sind und eine Sollbruch- oder Sollbiegestelle aufweisen, die bei einem Überschreiten einer bestimmten Kraft eine Relativbewegung der beiden Elemente zulässt. Insbesondere sind die beiden Elemente nach dem Abschluss des Befestigungsvorgangs nicht mehr einstückig miteinander verbunden.

Das Nietelement und das Umformelement können mittels des Nietabschnitts und des Umformabschnitts miteinander gekoppelt sein. Der Umformabschnitt kann hierfür einen Kopplungsabschnitt aufweisen. Insbesondere ist der Umformabschnitt abschnittsweise in eine Ausnehmung des Nietabschnitts eingeführt, bevorzugt eingesteckt oder eingepresst. Der Kopplungsabschnitt kann in einer axialen Richtung von dem Nietabschnitt weg divergieren, z.B. abschnittsweise konisch ausgebildet sein.

Der Nietabschnitt und/oder der Umformabschnitt können ringförmig, insbesondere kreisringförmig ausgestaltet sein. Eine rotationssymmetrische Ausgestaltung der genannten Abschnitte und/oder weiterer Abschnitte des Nietelements und/oder des Umformelements ist in vielen Fällen vorteilhaft, da sie eine einfache Herstellung und/oder Montage der Befestigungseinheit ermöglicht. Für bestimmte Anwendungen kann jedoch von einer symmetrischen, insbesondere rotationssymmetrischen Ausgestaltung abgewichen werden.

Das Umformelement kann eine Außenkontur umfassen, die eine Außenkontur des Nietabschnitts in radialer Richtung nicht überragt, um das Einführen der Befestigungseinheit in das Werkstück zu erleichtern.

Der Umformabschnitt kann eine Umformfläche aufweisen, die in einer axialen Richtung von dem Nietabschnitt weg divergiert, insbesondere wobei die Umformfläche gekrümmt ist, um die erwähnte Relativbewegung der beiden Elemente effizient in eine Umformung des Nietabschnitts umzusetzen. Die Umformfläche kann sich in axialer Richtung von dem Nietelement aus gesehen an den Kopplungsabschnitt anschließen. Ein Übergang zwischen der Umformfläche und dem Kopplungsabschnitt kann kontinuierlich sein oder eine Kante aufweisen.

Gemäß einer kompakten Ausführungsform der Befestigungseinheit sind das Nietelement und das Umformelement koaxial angeordnet.

Das Nietelement kann in einem dem Nietabschnitt abgewandten Bereich des Nietelements einen zur Anlage an dem Werkstück ausgebildeten Flanschabschnitt und/oder einen relativ zu dem Nietabschnitt radial verbreiterten Abschnitt aufweisen. Diese Maßnahme erhöht die Zuverlässigkeit der Befestigung der Einheit an dem Werkstück. Die Einheit kann dann das Werkstück durch den durch Umformen erzeugten Hintergriff und den Flanschabschnitt bzw. den verbreiterten Abschnitt beidseitig umgreifen.

Die Befestigungseinheit kann für den Einsatz an einem vorgelochten Werkstück vorgesehen sein. Sie kann aber auch selbststanzend sein. Insbesondere umfasst das Umformelement an einem den Umformabschnitt abgewandten Ende einen Stanzabschnitt.

Gemäß einer Ausführungsform der Einheit weist der Abstützabschnitt eine Abstützfläche auf, die eine Erhebung und/oder eine Aussparung umfasst. Die Aussparung kann bei einer selbststanzenden Einheit den ausgestanzten Butzen (teilweise) aufnehmen. Beispielsweise wird die Aussparung durch eine Stanzkante definiert, die sich aus der Abstützfläche erhebt.

Das Nietelement und/oder das Umformelement können eine durchgehende axiale Öffnung aufweist. Die Elemente können hülsenartig ausgebildet sein. Sie können zumindest abschnittsweise mit einem Innengewinde versehen sein, um so funktionell als Mutterelement zu wirken. Bevorzugt weist das Umformelement - sei es mit einer Sackbohrung oder mit einer durchgehenden Bohrung versehen - ein Innengewinde auf. In einigen Ausführungsformen ist das Umformelement deutlich massiver ausgestaltet als das Nietelement, insbesondere wenn das Umformelement als stabilisierendes Element und/oder als Abstandshalter fungiert, wie nachstehend noch erläutert wird. Es kann daher Kräfte besser aufnehmen, die durch das Gewinde eingeleitet werden.

Es kann auch vorgesehen sein, dass das Nietelement in axialer Richtung geschlossen ist. Es kann deckelartig ausgestaltet sein. Beispielsweise verschließt das Nietelement bei dieser Ausführungsform eine durchgehende axiale Öffnung des Umformelements.

Das Nietelement und/oder das Umformelement können einen Funktionsabschnitt mit einem Innen- oder Außengewinde aufweisen. Die Befestigungseinheit kann die Funktionalität einer Mutter oder eines (Gewinde)Bolzens haben. Auch Ausführungsformen mit einer Kombination dieser Funktionalitäten sind möglich.

Insbesondere weisen der Nietabschnitt und/oder der Umformabschnitt und/ der Abstützabschnitt zumindest ein Verdrehsicherungsmerkmal auf, insbesondere zumindest eine zumindest abschnittsweise in axialer oder radialer Richtung verlaufende Rippe und/oder Nut. Auch eine Außenkontur der genannten Abschnitte kann eine Verdrehsicherung bewirken, wenn diese nämlich von einer kreisförmigen Grundform abweicht. Die Grundform kann beispielsweise oval oder ein Dreieck, Viereck oder Polygon sein. Die Ecken und Kanten dieser Grundformen sind bevorzugt abgerundet.

Die vorliegende Erfindung betrifft ferner ein Zusammenbauteil umfassend ein Werkstück, insbesondere Blechteil, und eine an dem Werkstück befestigte Befestigungseinheit gemäß zumindest einer der vorstehend beschriebenen Ausführungsformen. Ein umgeformter Abschnitt des Nietabschnitts hintergreift dabei das Werkstück an einer einer Einführseite abgewandten Seite zumindest abschnittsweise. Die Einführseite ist die Seite des Werkstücks, von der die Befestigungseinheit in das Werkstück eingeführt wird. Das Werkstück kann ein geschlossenes oder teilweise offenes Hohlprofil sein.

Gemäß einer Ausführungsform stützt sich das Umformelement in axialer Richtung an dem Werkstück ab, insbesondere an einem dem Umformabschnitt abgewandten Ende des Umformelements.

Das Umformelement kann sich durch einen Hohlraum des Werkstücks erstrecken, was sich auch positiv auf die mechanische Stabilität des Werkstücks auswirkt. Eine axiale Erstreckung des Nietelements ist kleiner als die des Umformelements, insbesondere wenn letzteres als Abstandshalter oder als stabilisierendes Element fungieren soll (siehe oben). Die axiale Erstreckung des Umformelements kann an die Geometrie des zu stabilisierenden Hohlprofilwerkstücks bzw. des zu überspannenden Hohlraums angepasst sein. Das Nietelement kann ein Standardelement sein, dessen axiale Erstreckung unabhängig der vorstehend beschriebenen Geometrie des Werkstücks gewählt wird. Beispielsweise ist die axiale Erstreckung des Umformelements größer als das doppelte, das 3-fache, das 4-fache oder das 5-fache der axialen Erstreckung des Nietelements in einem nicht-verformten Zustand (also vor der Befestigung an der Einheit an dem Werkstück).

Das Werkstück kann eine vorgefertigte Öffnung zur Aufnahme der Befestigungseinheit aufweisen. Es ist aber auch möglich, das Zusammenbauteil durch die Verwendung einer selbststanzenden Befestigungseinheit zu erhalten. Ein durch die Befestigungseinheit aus dem Werkstück herausgestanzter Butzen kann zwischen dem der Befestigungseinheit und dem Werkstück eingeklemmt sein, so dass er nicht störend herumvagabundieren kann.

Gemäß einer Ausführungsform des Zusammenbauteils ist der Anschlag an dem Werkstück ausgebildet.

Die Erfindung betrifft ferner ein Verfahren zur Herstellung eines Zusammenbauteils gemäß einer der vorstehend beschriebenen Ausführungsformen mit den Schritten:
- Bereitstellen eines vorgelochten oder nicht-vorgelochten Werkstücks,
- Bereitstellen einer Befestigungseinheit gemäß zumindest einer der vorstehend beschriebenen Ausführungsformen,
- Einführen der Befestigungseinheit in das Werkstück derart, dass der Abstützabschnitt mit einem Anschlag zusammenwirkt, um eine Relativbewegung zwischen dem Nietelement und dem Umformelement und damit ein Umformen des Nietabschnitts in einer radialen Richtung zu bewirken.

Die Relativbewegung der Elemente ist eine Bewegung der Elemente aufeinander zu.

Gemäß einer Ausführungsform des Verfahrens wird die Befestigungseinheit mittels einer einschrittigen axialen Einführbewegung in das Werkstück eingeführt und an diesem fixiert. Es sind also keine einander entgegen gerichteten Bewegungen erforderlich, um das Einführen und das Fixieren der Einheit zu bewirken. Diese beiden Prozesse können also in Zuge einer einzigen Bewegung, die kontinuierlich sein kann oder eine zeitlich variable Kraftbeaufschlagung und/oder Bewegungsgeschwindigkeit umfassen kann, erfolgen, was den Befestigungsprozess erheblich vereinfacht.

Das Einführen der Befestigungseinheit in das Werkstück und das Fixieren der Befestigungseinheit an das Werkstück können durch gleichgerichtete Bewegungskomponenten erzeugt werden, insbesondere wobei die Bewegungskomponenten ineinander übergehen.

Nachfolgend wird die vorliegende Erfindung rein beispielhaft anhand vorteilhafter Ausführungsformen in Bezugnahme auf die beigefügten Zeichnungen beschrieben. Es zeigen:
- Fig. 1: eine Ausführungsform der erfindungsgemäßen Befestigungseinheit,
- Fig. 2A, 2B: die Befestigungseinheit gemäß Fig. 1 in verschiedenen Perspektivansichten,
- Fig. 3A, 3B: das Nietelement der Befestigungseinheit gemäß Fig. 1 in verschiedenen Perspektivansichten,
- Fig. 4A, 4B: das Umformelement der Befestigungseinheit gemäß Fig. 1 in verschiedenen Perspektivansichten,
- Fig. 5A bis 5C: die Befestigung der Befestigungseinheit gemäß Fig. 1 an einem Werkstück,
- Fig. 6: eine zweite Ausführungsform der erfindungsgemäßen Befestigungseinheit,
- Fig. 7A, 7B: die Befestigungseinheit gemäß Fig. 6 in verschiedenen Perspektivansichten,
- Fig. 8A bis 8C: die Befestigung der Befestigungseinheit gemäß Fig. 6 an einem Werkstück,
- Fig. 9A, 9B: weitere Ausführungsformen der erfindungsgemäßen Befestigungseinheit,
- Fig. 10: eine weitere Ausführungsform der erfindungsgemäßen Befestigungseinheit,
- Fig. 11A, 11B: das Nietelement der Befestigungseinheit gemäß Fig. 10 in verschiedenen Perspektivansichten,
- Fig. 12A, 12B: das Umformelement der Befestigungseinheit gemäß Fig. 10 in verschiedenen Perspektivansichten,
- Fig. 13A, 13B: die Befestigungseinheit gemäß Fig. 10 in verschiedenen Perspektivansichten und
- Fig. 14A bis 14C: die Befestigung der Befestigungseinheit gemäß Fig. 10 an einem Werkstück.

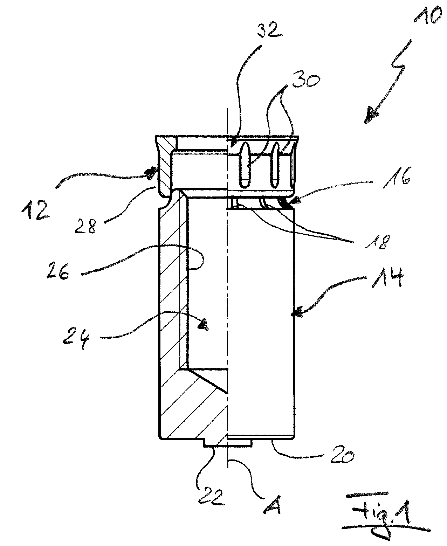

Fig. 1 zeigt eine Befestigungseinheit 10 in einer Schnittansicht (links einer Längsachse A) bzw. in einer Seitenansicht (rechts der Achse A). Die Befestigungseinheit 10 umfasst ein Nietelement 12 und ein Umformelement 14, die ineinander gesteckt oder gepresst sind, um die beiden Elemente 12, 14 miteinander zu koppeln.

Das Umformelement 14 weist einen von dem Nietelement 12 weg divergierenden Umformabschnitt 16 auf, der im vorliegenden Beispiel abschnittsweise eine Krümmung aufweist. Der Abschnitt 16 kann auch eine konische Form haben. Er ist mit in axialer Richtung verlaufenden und in Umfangsrichtung verteilt angeordneten Verdrehsicherungsrippen 18 versehen. An dem dem Umformabschnitt 16 abgewandten Ende weist das Umformelement 14 eine Abstützfläche 20 auf, von der sich eine Erhebung 22 erstreckt. Ferner weist das Element 14 eine zentrale Bohrung 24 mit einem Innengewinde 26 auf.

Der Umformabschnitt 16 ist abschnittsweise in einen ringförmigen Nietabschnitt 28 des Nietelements 12 eingepresst, sodass die Elemente 12, 14 verlierersicher miteinander gekoppelt sind. Der Nietabschnitt 28 ist an seiner Außenseite mit in axialer Richtung verlaufenden und in Umfangsrichtung verteilt angeordneten Verdrehsicherungsrippen 30 versehen. An dem dem Nietabschnitt 28 abgewandten Ende weist das Nietelement 12 einen von dem Nietabschnitt 28 weg divergierenden Bund 32 auf, der konisch ausgebildet ist aber auch gekrümmt sein kann. Zusätzlich oder alternativ kann hier ein Flanschabschnitt vorgesehen sein, der eine Anlagefläche aufweist, die in Anlage mit dem Werkstück bringbar ist.

Die Elemente 12, 14 sind im Wesentlichen rotationssymmetrisch ausgestaltet. In bestimmten Anwendungsfällen kann es jedoch auch vorteilhaft sein, eine im Wesentlichen ovale Querschnittsform - gesehen in einer Ebene senkrecht zur Achse A - zu wählen. Andere Querschnittsformen, wie beispielsweise quadratische, rechteckige oder polygonalen Formen, können ebenfalls zum Einsatz gelangen. Ecken und/oder Kanten der Grundformen können abgerundet sein.

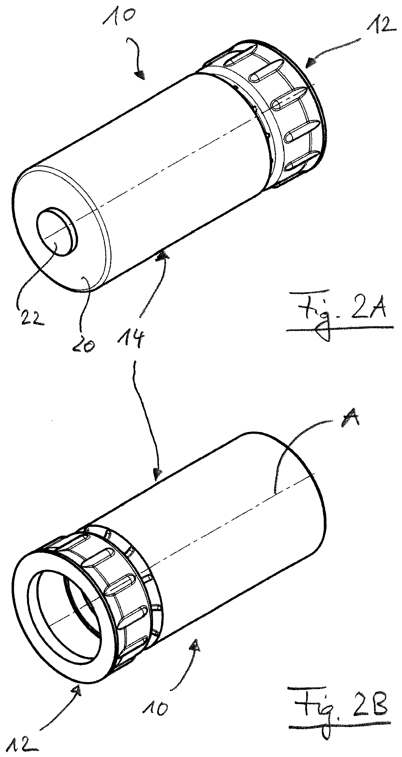

In den Fig. 2A und 2B ist die Befestigungseinheit 10 in verschiedenen Perspektivansicht gezeigt, was deren kompakte Bauart verdeutlicht. Vereinfacht gesagt ist das Nietelement 12 hülsenartig ausgebildet. Er ist hinreichend fest auf ein Ende des im Wesentlichen zylinderartig ausgestalteten Umformelements 14 aufgesteckt, um als vormontierte Einheit 10 an ein Werkstück, an dem es befestigt werden soll, herangeführt werden zu können.

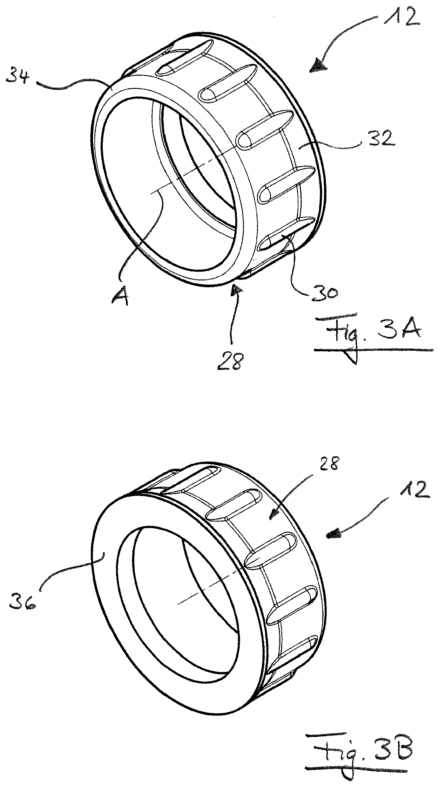

Die Fig. 3A und 3B zeigen das Nietelement 12 in verschiedenen Perspektivansichten, so dass dessen hülsenartiger Charakter deutlicher zu erkennen ist. Der Nietabschnitt 28 ist im Wesentlichen ein hohlzylinderförmiger Abschnitt, der an dem dem Bund 32 abgewandten Ende außenseitig angefast ist (Fase 34). Die Verdrehsicherungsrippen 30 erstrecken sich nicht ganz bis zu der Fase 34, ragen jedoch in den Bund 32 hinein. An einer dem in einem vormontierten Zustand dem Umformelement 14 abgewandten Seite weist das Element 12 eine ringförmige Druckfläche 36 auf, an der eine Setzeinrichtung angreift, mit der die Einheit 10 an einem Werkstück befestigt wird, wie nachstehend noch erläutert ist.

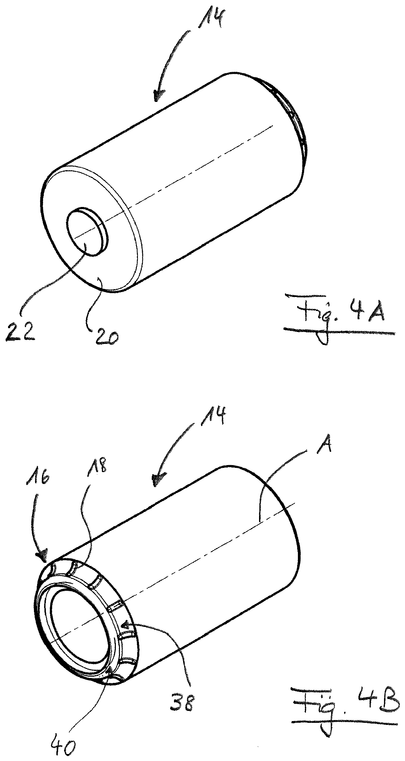

Die Fig. 4A und 4B zeigen das Umformelement 14 in verschiedenen Perspektivansichten. In Bezug auf die Fig. 4A sei erwähnt, dass die runde, flache Erhebung 22 auch eine von der Fläche 20 weg konvergierende, regelmäßige oder unregelmäßige Formgebung aufweisen kann. Eine von einer Rotationssymmetrie abweichende Formgebung kann - wie nachstehend noch deutlich wird - als Verdrehsicherungsmerkmal dienen. Die Erhebung 22 kann bei Bedarf auch mit axialen Rippen versehen sein.

In der Fig. 4B ist der Umformabschnitt 16 gut zu erkennen. Er gliedert sich in eine Umformfläche 38, die mit den Verdrehsicherungsrippen 18 versehen ist und einen Kopplungsabschnitt 40, der im vorliegenden Beispiel frei von solchen Rippen ist. Der Kopplungsabschnitt 40 ist in einem vormontierten Zustand der Befestigungseinheit 10 in den Nietabschnitt 28 eingesteckt, insbesondere so weit, dass der Nietabschnitt 28 die Rippen 18 kontaktiert. Der Übergang zwischen dem Kopplungsabschnitt 40, der zur Erleichterung des Aufsteckens des Nietelements 12 konisch oder gekrümmt ausgebildet sein kann, zu der Umformfläche 38 ist bevorzugt kontinuierlich. Es kann jedoch auch eine Kante in dem Übergangsbereich vorgesehen sein.

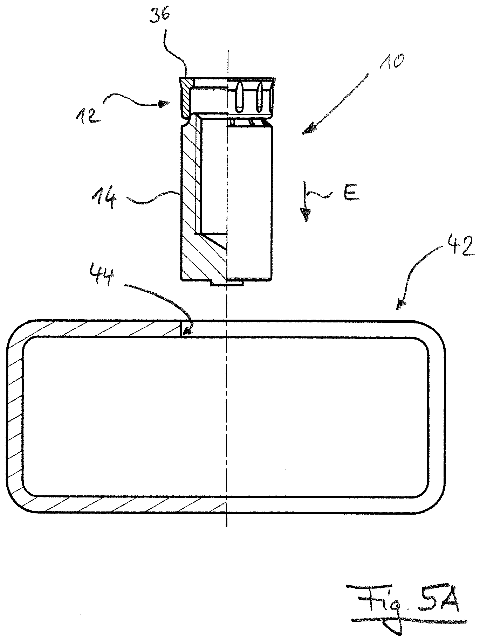

Anhand der Fig. 5A bis 5C wird nachstehend erläutert, wie die Einheit 10 an einem Werkstück 42, hier beispielhaft ein Hohlprofil aus Metall (Blechteil), befestigt wird. Links der Achse A ist eine Schnittansicht zu sehen, rechts davon ist eine Seitenansicht gezeigt. Ein herkömmliches Befestigungselement kann hier nicht eingesetzt werden, da im Inneren des Werkstücks keine Matrize platziert werden kann.

Das Werkstück 42 ist vorgelocht, d. h. es weist zu Beginn des Befestigungsprozesses bereits ein Loch 44 auf, durch das die Einheit 10 in das Werkstück 42 eingebracht werden kann. Grundsätzlich kann die Einheit 10 auch selbststanzend sein.

Die Befestigung der Einheit 10 an dem Werkstück 42 erfolgt durch eine nicht gezeigte Setzeinrichtung, die auf die Druckfläche 36 einwirkt und so die Einheit 10 in Einführrichtung E bewegt.

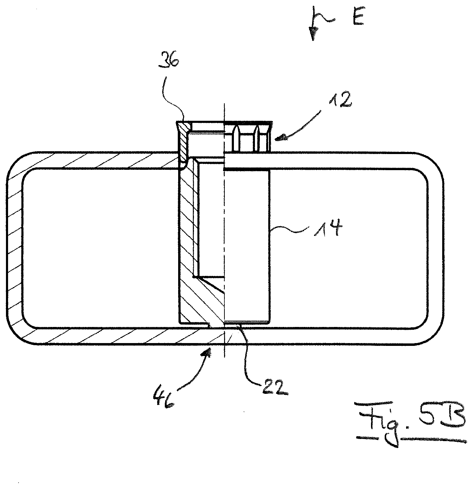

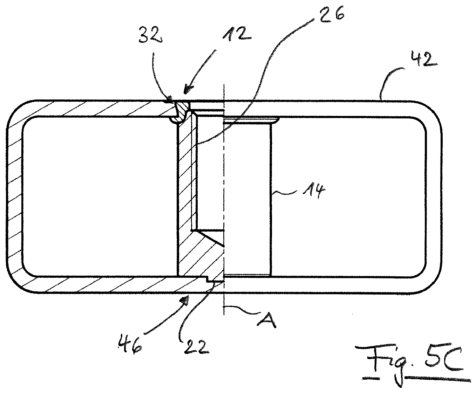

In Fig. 5B ist ein Zustand gezeigt, in dem die Einheit 10 bereits so tief in das Werkstück 42 eingedrungen ist, dass die Erhebung 22 eine Innenseite eines dem Loch 44 gegenüberliegenden Abschnitts 46 des Werkstücks 42 berührt. Der entsprechende Werkstückabschnitt 46, der sich wiederum auf einer nicht gezeigten Abstützfläche abstützt, wirkt ab diesem Zeitpunkt als Anschlag der der Einführbewegung in Richtung E entgegenwirkt. Da die Setzeinrichtung allerdings weiterhin auf die Druckfläche 36 einwirkt, wird das Nietelement 12 nun in axialer Richtung stark gegen das Umformelement 14 gepresst, so dass der Nietabschnitt 28 auf die Umformfläche 38 aufläuft und aufgrund deren Formgebung nach radial außen umgebogen wird, wie in Fig. 5C gezeigt ist. Der Nietabschnitt 28 hintergreift dann teilweise einen Bereich des Werkstücks 42 um das Loch 44.

Die Erhebung 22 wurde in dem in Fig. 5C gezeigten Endzustand in den Werkstückabschnitt 46 eingepresst. Das Umformelement 14 erstreckt sich nun zwischen gegenüberliegenden Innenseiten des Werkstücks 42 und verleiht diesem zusätzliche mechanische Stabilität. Es kann auch als eine Art Abstandshalter wirken. Das Element 14 verbleibt in dem Werkstück 42 und sichert außerdem die Verbindung zwischen dem Nietelement 12 und dem Werkstück 42. Grundsätzlich wäre diese Sicherung nicht zwingend erforderlich, da das Werkstück 42 zuverlässig zwischen dem Bund 32 und dem hintergreifenden, umgeformten Abschnitt des Nietabschnitt 28 geklemmt ist.

Die Rippen 30 sichern das Element 12 gegen ein Verdrehen relativ zu dem Werkstück 42, da sie sich in die Wandung des Lochs 44 eingegraben haben. Für eine Verdrehsicherung zwischen den Elementen 12 und 14 sorgen die Rippen 18.

Es versteht sich, dass die Befestigung der Einheit 10 auch ohne Erhebung 22 durchführbar ist. Ferner ist darauf hinzuweisen, dass die Einheit 10 auch bei anderen Werkstücken als bei Hohlprofilen zum Einsatz gelangen kann. Die Abstützfläche 20 (mit oder ohne Erhebung 22) kann sich bei dem Befestigungsprozess dann an einer separaten Anlagefläche abstützen. Unter Umständen ist es auch denkbar, dass das Umformelement 14 nach Beendigung des Befestigungsprozesses entfernt und - falls gewünscht - wiederverwendet wird.

Nachdem die Einheit 10 zuverlässig an dem Werkstück 42 befestigt wurde, kann das Innengewinde 26 zur Befestigung weiterer Komponenten an dem Werkstück 42 genutzt werden.

Ein wesentlicher Aspekt der Einheit 10 ist, dass sie als vormontierte Komponente sowohl ein Nietelement als auch die für dessen Befestigung erforderliche Matrize umfasst. Dies ermöglicht die Befestigung des Nietelements insbesondere in Situationen, in denen die Matrize nicht in die erforderliche Position gebracht werden kann. Im vorstehend beschriebenen Ausführungsbeispiel dient das als Matrize fungierende Umformelement 14 gleichzeitig als Befestigungselement im eigentlichen Sinne, da es das Innengewinde 26 aufweist. Grundsätzlich ist es auch möglich, das Nietelement 12 mit einem Innengewinde zu versehen, beispielsweise in einem Bereich des Bunds 32, der dann bevorzugt eine größere axiale Erstreckung aufweist.

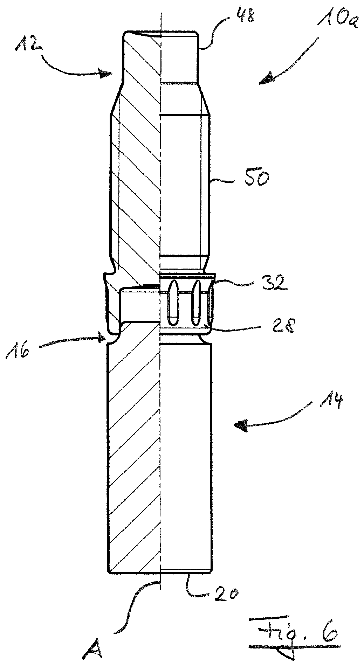

Fig. 6 zeigt eine Befestigungseinheit 10a, die hinsichtlich der Ausgestaltung der Abschnitte 16 (mit dem Kopplungsabschnitt 40 und der Umformfläche 38) und 28 und hinsichtlich der Art und Weise ihrer Befestigung der vorstehend beschriebenen Befestigungseinheit 10 entspricht. Allerdings weist das Nietelement 12 keine durchgehende Öffnung auf, sondern ist auf der dem Nietabschnitt 28 abgewandten Seite des Bundes 32 mit einem Bolzenabschnitt 48 versehen, der ein Außengewinde 50 trägt. Das Umformelement 14 ist massiv ausgeführt, da es keine eigentliche Befestigungsfunktion bereitstellen muss. Zu Zwecken der Gewichtsreduktion kann jedoch ebenfalls eine Sackbohrung oder Durchgangsbohrung aufweisen. Ferner weist seine Abstützfläche 20 keine Erhebung 22 auf.

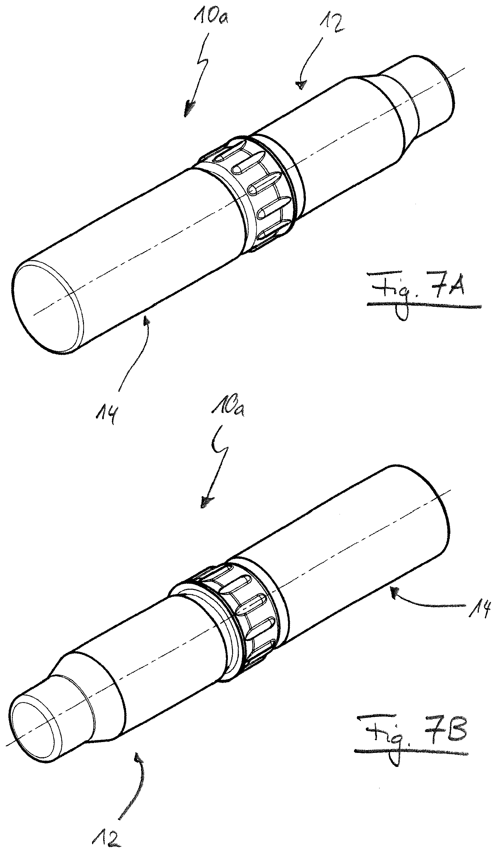

Die Fig. 7A und 7B zeigen Perspektivansichten der Einheit 10a.

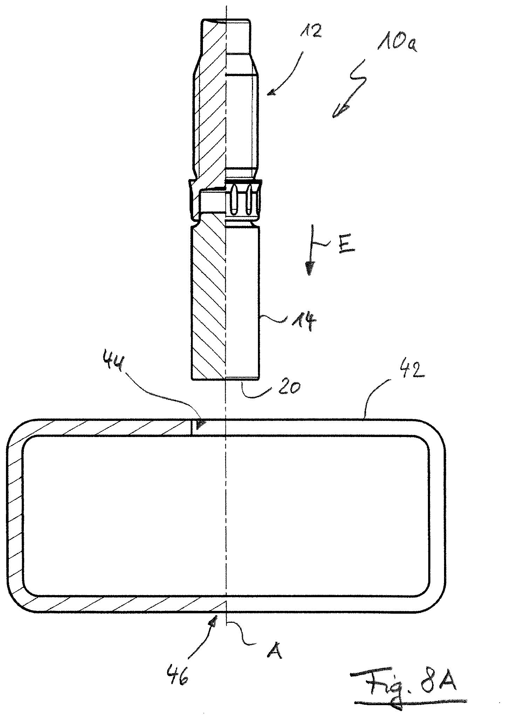

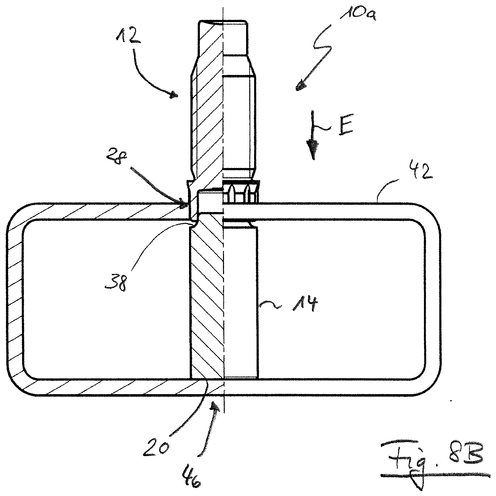

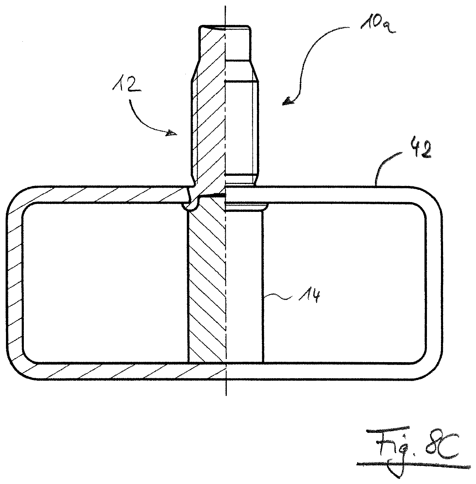

Die Fig. 8A bis 8C zeigen die Befestigung der Einheit 10a an dem Werkstück 42. Es ist ersichtlich, dass der Prozess analog abläuft wie jener, der anhand der Fig. 5A bis 5C beschrieben wurde. Mit dem Anschlag der Abstützfläche 20 an dem Werkstückabschnitt 46 stoppt die Bewegung des Elements 14 im Wesentlichen, während das Element 12 weiterhin durch die nicht gezeigte Setzeinrichtung in Einführrichtung E bewegt wird. Der Nietabschnitt 28 wird dadurch auf die Umformfläche 38 aufgeschoben und durch diese nach außen umgebogen, bis der in Fig. 8C gezeigte Zustand erreicht wurde. Die Einheit 10a ist dann zuverlässig an dem Werkstück 42 befestigt.

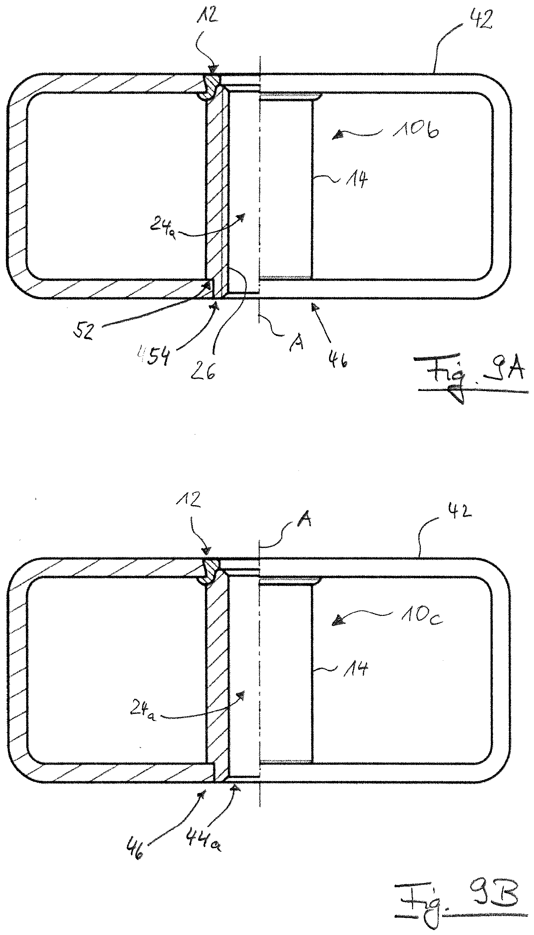

Fig. 9A zeigt eine Baueinheit 10b, die der Baueinheit 10 ähnelt. Abweichend von dieser ist allerdings eine durchgehende Bohrung 24a vorgesehen. Das Element 14 der Einheit 10b ragt zudem in ein Loch 44a im Werkstückabschnitt 46, das vorgefertigt ist oder durch das Element 14 ausgestanzt wurde. Die axiale Abstützung des Elements 14 beim Befestigungsvorgang, die zu der Relativbewegung der Elemente 12, 14 führt, erfolgt hier durch eine Abstützschulter 52 und/oder eine ringförmige Abstützfläche 54 an dem dem Element 12 abgewandten Ende des Umformelements 14. Die Fläche 54 kann sich bei dem Befestigungsvorgang an einer externen Abstützfläche (nicht gezeigt) abstützen.

Während das Umformelement 14 gemäß Fig. 9A ein Innengewinde 26 aufweist, das ein Einschrauben weiterer Komponenten von beiden Seiten des Werkstücks 42 ermöglicht, ist das Umformelement 14 gemäß Fig. 9B eine Hülse ohne Innengewinde. Dadurch können weitere Komponenten einfach durch die Bohrung 24a geschoben werden.

Grundsätzlich ist es denkbar, dass anstelle des gezeigten Nietelements 12 ein Nietelement zum Einsatz gelangt, wie es anhand der Fig. 6 bis 8C beschrieben wurde.

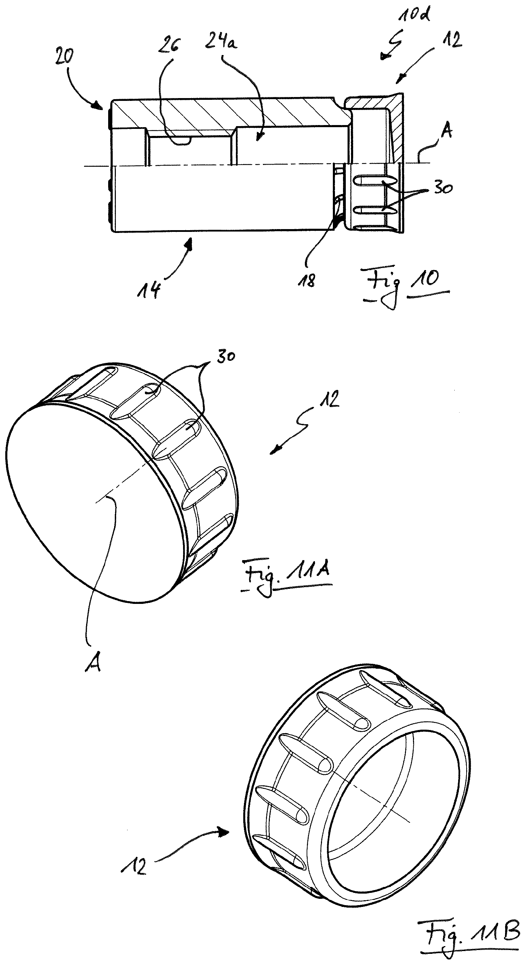

Fig. 10 zeigt eine Befestigungseinheit 10d in einer Schnittansicht (oberhalb der Längsachse A) bzw. in einer Seitenansicht (unterhalb der Achse A). Die Befestigungseinheit 10d umfasst ein Nietelement 12 und ein Umformelement 14, die ineinander gesteckt oder gepresst sind, um die beiden Elemente 12, 14 miteinander zu koppeln.

Abweichend von den vorstehend beschriebenen Ausführungsformen 10, 10b und 10c ist das Nietelement 12 der Einheit 10d einseitig geschlossen und bildet eine Art Deckel, der eine zentrale, durchgehende Bohrung 24a in dem Umformelement 14 einseitig verschließt. Die Bohrung 24a ist abschnittsweise mit einem Innengewinde 26 versehen.

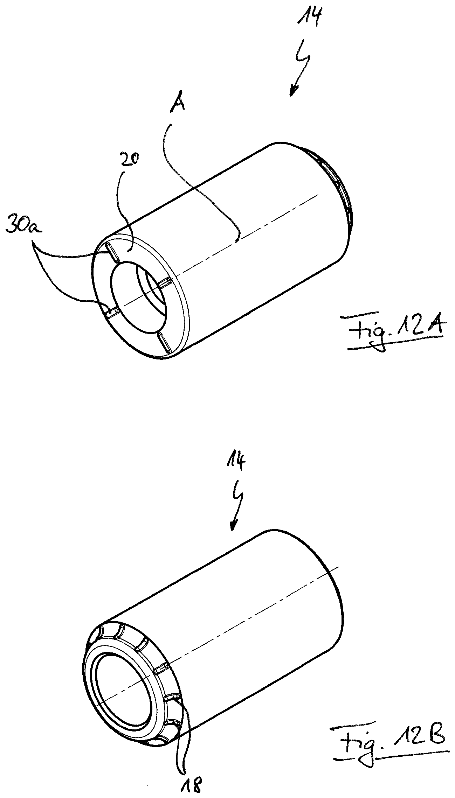

Den Fig. 11A und 11B ist der deckelartige Charakter des Nietelements 12 gut zu entnehmen. Es ist mit axialen Rippen 30 versehen,
Das Umformelement 14 der Einheit 10d ist in Perspektivansichten in den Fig. 12A und 12B gezeigt. Eine Abstützfläche 20 des Elements 14 ist ringförmig ausgestaltet. Von ihr erstrecken sich in axialer Richtung Verdrehsicherungsrippen 30a, die in radialer Richtung verlaufen.

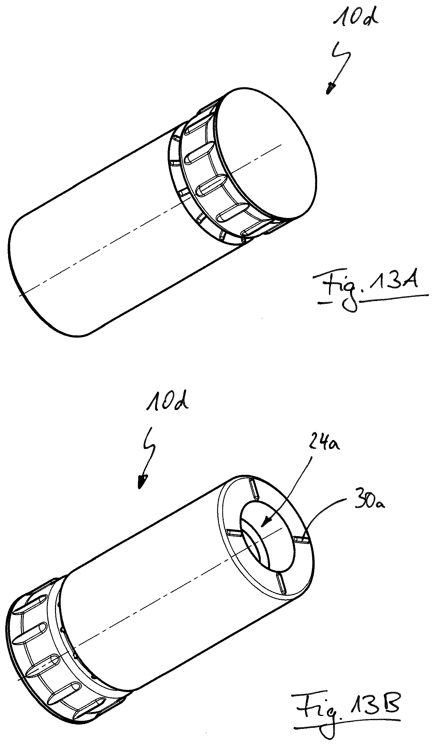

Ein vormontierter Zustand der Elemente 12, 14 bzw. der Einheit 10d ist in den Fig. 13A und 13B zeigt. Anders als gezeigt können die Element 12, 14 - wie auch die der Einheiten 10 bis 10c - einstückig miteinander verbunden sein. Geeignet ausgebildete und angeordnete Schwächezonen oder Sollbruchstellen zwischen den Elementen 12, 14 gestatten deren relative axiale Verschiebung bei dem Befestigungsprozess.

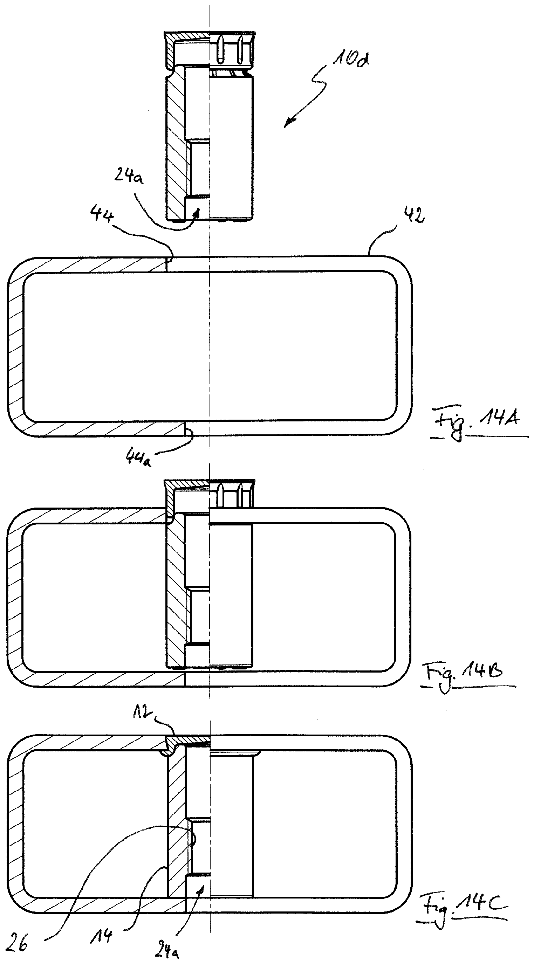

Dieser Prozess ist in den Fig. 14A bis 14C gezeigt. Er verläuft im Wesentlichen wie die vorstehend beschriebenen Prozesse. Im gezeigten Ausführungsbeispiel ist das Werkstück 42, an dem die Einheit 10d befestigt wird, wieder ein Hohlprofil, das- in Einführrichtung gesehen - ein vorgefertigtes Loch 44 und ein kleineres vorgefertigtes Loch 44a aufweist. Der Durchmesser des Lochs 44a entspricht im Wesentlichen dem Innendurchmesser der Bohrung 24a, während der Durchmesser des Lochs 44 im Wesentlichen dem Außendurchmesser des zylindrischen Körpers des Umformelements 14 entspricht. So kann das Element problemlos in das Loch 44 eingeführt werden, bis es sich mit der Abstützfläche 20 auf einem Ringbereich um das Loch 44a abstützt. Dabei "graben" sich die Rippen 30a dort in die Innenwand des Hohlprofils 42 und entfalten somit eine verdrehsichernde Wirkung.

Die Einführbewegung führt ab dem Moment, ab dem sich das Umformelement 14 auf dem Hohlprofil 42 abstützt, zu einer Relativbewegung der Elemente 12, 14, die - wie bereits beschrieben - in einer Umformung des Nietabschnitts 12 mündet.

Die befestigte Einheit 10d wirkt nun ähnlich wie die Einheit 10 als eine einseitig geschlossene Sackbohrung mit einem Innengewinde 26, an der ein anderes Bauteil befestigt werden kann. Die Öffnung der Bohrung liegt aber auf der anderen Seite des Hohlprofils 42 als bei dem in Fig. 5C gezeigten Zusammenbauteil.

Das abstützseitige Ende der Einheit 10d kann auch wie in Fig. 9A oder 9B gezeigt ausgestaltet sein.

Den beschriebenen Befestigungseinheiten 10 bis 10d ist gemein, dass sie mittels einer einzigen Einführbewegung in das Werkstück eingeführt und an diesem befestig werden können. Zwei- oder mehrstufige Befestigungsprozesse mit entgegen gesetzten Bewegungskomponenten sind wesentlich aufwändiger.

### Bezugszeichenliste

- 10, 10a, 10b, 10c 10d: Befestigungseinheit
- 12: Nietelement
- 14: Umformelement
- 16: Umformabschnitt
- 18, 30, 30a: Verdrehsicherungsrippe
- 20: Abstützfläche
- 22: Erhebung
- 24, 24a: Bohrung
- 26: Innengewinde
- 28: Nietabschnitt
- 32: Bund
- 34: Fase
- 36: Druckfläche
- 38: Umformfläche
- 40: Kopplungsabschnitt
- 42: Werkstück
- 44, 44a: Loch
- 46: Werkstückabschnitt
- 48: Bolzenabschnitt
- 50: Außengewinde
- 52: Abstützschulter
- 54: Abstützfläche

## Patentansprüche

1. Befestigungseinheit (10, 10a, 10b, 10c, 10d) zur Befestigung an einem Werkstück (42), umfassend ein Nietelement (12) und ein mit dem Nietelement (12) gekoppeltes und relativ zu diesem bewegbares Umformelement (14), wobei das Nietelement (12) einen Nietabschnitt (28) aufweist und das Umformelement (14) einen Umformabschnitt (16) und einen an einem dem Umformabschnitt (16) abgewandten Bereich des Umformelements (14) angeordneten Abstützabschnitt zur axialen Abstützung der Befestigungseinheit (10, 10a, 10b, 10c, 10d) an einem Anschlag aufweist, wobei der Nietabschnitt (28) und der Umformabschnitt (16) derart ausgestaltet sind, dass der Nietabschnitt (28) bei einer axialen Relativbewegung zwischen dem Nietelement (12) und dem Umformelement (14) mit dem Umformabschnitt (16) zusammenwirkt und durch diesen in einer radialen Richtung umformbar ist, wobei der Abstützabschnitt und der Umformabschnitt (16) an gegenüberliegenden Enden des Umformelements (14) angeordnet und voneinander beabstandet sind, **dadurch gekennzeichnet, dass** eine axiale Erstreckung des Nietelements (12) kleiner als die des Umformelements (14) ist.

2. Befestigungseinheit (10, 10a, 10b, 10c, 10d) nach Anspruch 1,
wobei das Nietelement (12) und das Umformelement (14) separate Bauteile sind, und/oder
wobei das Nietelement (12) und das Umformelement (14) mittels des Nietabschnitts (28) und des Umformabschnitts (16) miteinander gekoppelt sind, insbesondere wobei der Umformabschnitt (16) einen Kopplungsabschnitt (40) aufweist, der zumindest abschnittsweise in eine Ausnehmung des Nietabschnitts (28) eingeführt, bevorzugt eingesteckt oder eingepresst ist.

3. Befestigungseinheit (10, 10a, 10b, 10c, 10d) nach Anspruch 1,
wobei das Nietelement (12) und das Umformelement (14) einstückig ausgebildet sind.

4. Befestigungseinheit (10, 10a, 10b, 10c, 10d) nach einem der vorstehenden Ansprüche,
wobei das Umformelement (14) eine Außenkontur umfasst, die eine Außenkontur des Nietabschnitts (28) in radialer Richtung nicht überragt und/oder
wobei das Nietelement (12) in einem dem Nietabschnitt (28) abgewandten Bereich des Nietelements (12) einen zur Anlage an dem Werkstück (42) ausgebildeten Flanschabschnitt und/oder einen relativ zu dem Nietabschnitt (28) radial verbreiterten Abschnitt aufweist.

5. Befestigungseinheit (10, 10a, 10b, 10c, 10d) nach einem der vorstehenden Ansprüche,
wobei der Umformabschnitt (16) eine Umformfläche (38) aufweist, die in einer axialen Richtung von dem Nietabschnitt (28) weg divergiert, insbesondere wobei die Umformfläche (38) gekrümmt ist, insbesondere
wobei sich die Umformfläche (38) in axialer Richtung von dem Nietelement (12) aus gesehen an einen Kopplungsabschnitt (40) anschließt, der zur Kopplung des Umformabschnitts (16) mit dem Nietabschnitt (28) vorgesehen ist.

6. Befestigungseinheit (10, 10a, 10b, 10c, 10d) nach einem der vorstehenden Ansprüche,
wobei die Befestigungseinheit (10, 10a, 10b, 10c, 10d) selbststanzend ist, insbesondere wobei das Umformelement (14) an einem den Umformabschnitt (16) abgewandten Ende einen Stanzabschnitt aufweist, und/oder wobei der Abstützabschnitt eine Abstützfläche (20) aufweist, die eine Erhebung (22) und/oder eine Aussparung umfasst.

7. Befestigungseinheit (10, 10a, 10b, 10c, 10d) nach einem der vorstehenden Ansprüche,
wobei das Nietelement (12) und/oder das Umformelement (14) eine durchgehende axiale Öffnung aufweist, oder
wobei das Nietelement (12) in axialer Richtung einseitig geschlossen ist.

8. Befestigungseinheit (10, 10a, 10b, 10c, 10d) nach einem der vorstehenden Ansprüche,
wobei das Nietelement (12) und/oder Umformelement (14) einen Funktionsabschnitt mit einem Innen- oder Außengewinde (26, 50) aufweist.

9. Befestigungseinheit (10, 10a, 10b, 10c, 10d) nach einem der vorstehenden Ansprüche,
wobei der Nietabschnitt (12) und/oder der Umformabschnitt (14) und/oder-falls vorhanden - der Abstützabschnitt zumindest ein Verdrehsicherungsmerkmal aufweist, insbesondere zumindest eine zumindest abschnittsweise in axialer oder radialer Richtung verlaufende Rippe (18, 30, 30a) und/oder Nut.

10. Zusammenbauteil umfassend ein Werkstück (42), insbesondere Blechteil, und eine an dem Werkstück (42) befestigte Befestigungseinheit (10) gemäß einem der Ansprüche 1 bis 9, wobei ein umgeformter Abschnitt des Nietabschnitts (28) das Werkstück (42) an einer einer Einführseite, von der die Befestigungseinheit (10) in das Werkstück (42) eingeführt wird, abgewandten Seite zumindest abschnittsweise hintergreift, insbesondere wobei sich das Umformelement (14) in axialer Richtung an dem Werkstück (42) abstützt, insbesondere an einem dem Umformabschnitt (16) abgewandten Ende des Umformelements (14).

11. Zusammenbauteil nach Anspruch 10,
wobei sich das Umformelement (14) durch einen Hohlraum des Werkstücks (42) erstreckt, insbesondere
wobei das Werkstück (42) ein Hohlprofil ist.

12. Zusammenbauteil nach einem der Ansprüche 10 und 11,
wobei das Werkstück (42) eine vorgefertigte Öffnung (44) zur Aufnahme der Befestigungseinheit (10) aufweist, oder
wobei ein durch die Befestigungseinheit (10) aus dem Werkstück (42) herausgestanzter Butzen zwischen dem der Befestigungseinheit (10) und dem Werkstück (42) eingeklemmt ist.

13. Zusammenbauteil nach einem der Ansprüche 10 bis 12,
wobei der Anschlag an dem Werkstück (42) ausgebildet ist.

14. Verfahren zur Herstellung eines Zusammenbauteils gemäß einem der Ansprüche 10 bis 13, mit den Schritten:
- Bereitstellen eines vorgelochten oder nicht-vorgelochten Werkstücks (42),
- Bereitstellen einer Befestigungseinheit (10) gemäß einem der Ansprüche 1 bis 9,
- Einführen der Befestigungseinheit (10) in das Werkstück (42) derart, dass der Abstützabschnitt mit einem Anschlag zusammenwirkt, um eine Relativbewegung zwischen dem Nietelement (12) und dem Umformelement (14) und damit ein Umformen des Nietabschnitts (28) in einer radialen Richtung zu bewirken.

15. Verfahren nach Anspruch 14,
wobei die Befestigungseinheit (10) mittels einer einschrittigen axialen Einführbewegung in das Werkstück (42) eingeführt und an diesem fixiert wird, und/oder
wobei das Einführen der Befestigungseinheit (10) in das Werkstück (42) und das Fixieren der Befestigungseinheit (10) an das Werkstück (42) durch gleichgerichtete Bewegungskomponenten erzeugt werden, insbesondere wobei die Bewegungskomponenten ineinander übergehen.

## Claims

1. A fastening unit (10, 10a, 10b, 10c, 10d) for fastening to a workpiece (42), said fastening unit (10, 10a, 10b, 10c, 10d) comprising a rivet element (12) and a reshaping element (14) coupled to the rivet element (12) and movable relative thereto, wherein the rivet element (12) has a rivet section (28) and the reshaping element (14) has a reshaping section (16) and a support section arranged at a region of the reshaping element (14) remote from the reshaping section (16) for axially supporting the fastening unit (10, 10a, 10b, 10c, 10d) at an abutment, wherein the rivet section (28) and the reshaping section (16) are designed such that, on an axial relative movement between the rivet element (12) and the reshaping element (14), the rivet section (28) cooperates with the reshaping section (16) and can be reshaped by it in a radial direction,
wherein
the support section and the reshaping section (16) are arranged at oppositely disposed ends of the reshaping element (14) and are spaced apart from one another, **characterized in that**
an axial extent of the rivet element (12) is smaller than that of the reshaping element (14).

2. A fastening unit (10, 10a, 10b, 10c, 10d) in accordance with claim 1,
wherein the rivet element (12) and the reshaping element (14) are separate components, and/or
wherein the rivet element (12) and the reshaping element (14) are coupled to one another by means of the rivet section (28) and the reshaping section (16), in particular wherein the reshaping section (16) has a coupling section (40) which is at least sectionally introduced into, preferably plugged into or pressed into, a recess of the rivet section (28).

3. A fastening unit (10, 10a, 10b, 10c, 10d) in accordance with claim 1,
wherein the rivet element (12) and the reshaping element (14) are formed in one piece.

4. A fastening unit (10, 10a, 10b, 10c, 10d) in accordance with any one of the preceding claims,
wherein the reshaping element (14) comprises an outer contour which does not project over an outer contour of the rivet section (28) in the radial direction, and/or
wherein, in a region of the rivet element (12) remote from the rivet section (28), the rivet element (12) has a flange section configured for contact with the workpiece (42) and/or a section widened radially relative to the rivet section (28).

5. A fastening unit (10, 10a, 10b, 10c, 10d) in accordance with any one of the preceding claims,
wherein the reshaping section (16) has a reshaping surface (38) which diverges away from the rivet section (28) in an axial direction, in particular wherein the reshaping surface (38) is curved, in particular
wherein the reshaping surface (38) adjoins a coupling section (40) in the axial direction, viewed from the rivet element (12), said coupling section (40) being provided for coupling the reshaping section (16) to the rivet section (28).

6. A fastening unit (10, 10a, 10b, 10c, 10d) in accordance with any one of the preceding claims,
wherein the fastening unit (10, 10a, 10b, 10c, 10d) is self-punching, in particular wherein the reshaping element (14) has a punching section at an end remote from the reshaping section (16), and/or
wherein the support section has a support surface (20) which comprises an elevated portion (22) and/or a cut-out.

7. A fastening unit (10, 10a, 10b, 10c, 10d) in accordance with any one of the preceding claims,
wherein the rivet element (12) and/or the reshaping element (14) has/have a throughgoing axial opening, or
wherein the rivet element (12) is closed at one side in the axial direction.

8. A fastening unit (10, 10a, 10b, 10c, 10d) in accordance with any one of the preceding claims,
wherein the rivet element (12) and/or the reshaping element (14) has/have a functional section having an internal thread or an external thread (26, 50).

9. A fastening unit (10, 10a, 10b, 10c, 10d) in accordance with any one of the preceding claims,
wherein the rivet section (12) and/or the reshaping section (14) and/or - if present - the support section has/have at least one feature providing security against rotation, in particular at least one rib (18, 30, 30a) and/or groove extending at least sectionally in the axial direction or the radial direction.

10. A component assembly comprising a workpiece (42), in particular a sheet metal part, and a fastening unit (10) in accordance with any one of the claims 1 to 9 fastened to the workpiece (42), wherein a reshaped section of the rivet section (28) at least sectionally engages behind the workpiece (42) at a side remote from an introduction side from which the fastening unit (10) is introduced into the workpiece (42), in particular
wherein the reshaping element (14) is supported in the axial direction at the workpiece (42), in particular at an end of the reshaping element (14) remote from the reshaping section (16).

11. A component assembly in accordance with claim 10,
wherein the reshaping element (14) extends through a hollow space of the workpiece (42), in particular
wherein the workpiece (42) is a hollow section.

12. A component assembly in accordance with one of the claims 10 and 11,
wherein the workpiece (42) has a prefabricated opening (44) for receiving the fastening unit (10), or
wherein a slug punched out of the workpiece (42) by the fastening unit (10) is clamped between the fastening unit (10) and the workpiece (42).

13. A component assembly in accordance with any one of the claims 10 to 12, wherein the abutment is formed at the workpiece (42).

14. A method of manufacturing a component assembly in accordance with any one of the claims 10 to 13, comprising the steps:
- providing a pre-punched or non-pre-punched workpiece (42);
- providing the fastening unit (10) in accordance with any one of the claims 1 to 9; and
- introducing the fastening unit (10) into the workpiece (42) such that the support section cooperates with an abutment to bring about a relative movement between the rivet element (12) and the reshaping element (14) and thus a reshaping of the rivet section (28) in a radial direction.

15. A method in accordance with claim 14,
wherein the fastening unit (10) is introduced into the workpiece (42) and is fixed thereto by means of a single-step axial introduction movement, and/or wherein the introduction of the fastening unit (10) into the workpiece (42) and the fixing of the fastening unit (10) to the workpiece (42) are produced by movement components of the same direction, in particular wherein the movement components merge into one another.

## Revendications

1. Unité de fixation (10, 10a, 10b, 10c, 10d) destinée à être fixée à une pièce à oeuvrer (42), comprenant un élément formant rivet (12) et un élément de déformation (14) couplé à l'élément formant rivet (12) et mobile par rapport à celui-ci,
dans laquelle l'élément formant rivet (12) présente un tronçon de rivet (28), et l'élément de déformation (14) présente un tronçon de déformation (16) et un tronçon d'appui disposé sur une zone de l'élément de déformation (14) détournée du tronçon de déformation (16) et destiné à appuyer l'unité de fixation (10, 10a, 10b, 10c, 10d) axialement contre une butée,
le tronçon de rivet (28) et le tronçon de déformation (16) sont conçus de telle sorte que lors d'un mouvement axial relatif entre l'élément formant rivet (12) et l'élément de déformation (14) le tronçon de rivet (28) coopère avec le tronçon de déformation (16) et peut être déformé par celui-ci dans une direction radiale,
le tronçon d'appui et le tronçon de déformation (16) sont disposés à des extrémités opposées de l'élément de déformation (14) et sont espacés l'un de l'autre,
**caractérisée en ce que**
une extension axiale de l'élément formant rivet (12) est inférieure à celle de l'élément de déformation (14).

2. Unité de fixation (10, 10a, 10b, 10c, 10d) selon la revendication 1,
dans laquelle l'élément formant rivet (12) et l'élément de déformation (14) sont des composants séparés, et/ou
l'élément formant rivet (12) et l'élément de déformation (14) sont couplés l'un à l'autre au moyen du tronçon de rivet (28) et du tronçon de déformation (16),
en particulier, le tronçon de déformation (16) comprend un tronçon de couplage (40) qui est inséré, de préférence enfiché ou enfoncé, au moins localement dans un évidement du tronçon de rivet (28).

3. Unité de fixation (10, 10a, 10b, 10c, 10d) selon la revendication 1,
dans laquelle l'élément formant rivet (12) et l'élément de déformation (14) sont réalisés d'un seul tenant.

4. Unité de fixation (10, 10a, 10b, 10c, 10d) selon l'une des revendications précédentes,
dans laquelle l'élément de déformation (14) présente un contour extérieur qui ne dépasse pas un contour extérieur du tronçon de rivet (28) dans la direction radiale, et/ou
dans une zone de l'élément formant rivet (12) détournée du tronçon de rivet (28), l'élément formant rivet (12) comprend un tronçon formant bride réalisé pour venir en appui contre la pièce à oeuvrer (42) et/ou un tronçon radialement élargi par rapport au tronçon de rivet (28).

5. Unité de fixation (10, 10a, 10b, 10c, 10d) selon l'une des revendications précédentes,
dans laquelle le tronçon de déformation (16) présente une surface de déformation (38) qui diverge dans une direction axiale en s'éloignant du tronçon de rivet (28),
en particulier, la surface de déformation (38) est incurvée,
en particulier, la surface de déformation (38), vue depuis l'élément formant rivet (12), se raccorde en direction axiale à un tronçon de couplage (40) prévu pour coupler le tronçon de déformation (16) au tronçon de rivet (28).

6. Unité de fixation (10, 10a, 10b, 10c, 10d) selon l'une des revendications précédentes,
dans laquelle l'unité de fixation (10, 10a, 10b, 10c, 10d) est auto-poinçonnant,
en particulier, l'élément de déformation (14) présente un tronçon de poinçonnage à une extrémité détournée du tronçon de déformation (16), et/ou le tronçon d'appui présente une surface d'appui (20) qui présente un bossage (22) et/ou un évidement.

7. Unité de fixation (10, 10a, 10b, 10c, 10d) selon l'une des revendications précédentes,
dans laquelle l'élément formant rivet (12) et/ou l'élément de déformation (14) présente une ouverture axiale traversante, ou
l'élément formant rivet (12) est fermé d'un côté dans la direction axiale.

8. Unité de fixation (10, 10a, 10b, 10c, 10d) selon l'une des revendications précédentes,
dans laquelle l'élément formant rivet (12) et/ou l'élément de déformation (14) présente(nt) un tronçon fonctionnel ayant un taraudage ou un filetage (26, 50).

9. Unité de fixation (10, 10a, 10b, 10c, 10d) selon l'une des revendications précédentes,
dans laquelle le tronçon de rivet (12) et/ou le tronçon de déformation (14) et/ou le tronçon d'appui - s'il est présent - présente(nt) au moins une caractéristique de blocage en rotation, en particulier au moins une nervure (18, 30, 30a) et/ou une rainure s'étendant au moins localement dans la direction axiale ou radiale.

10. Pièce d'assemblage comprenant une pièce à oeuvrer (42), en particulier une pièce en tôle, et une unité de fixation (10), fixée à la pièce à oeuvrer (42), selon l'une des revendications 1 à 9,
dans laquelle un tronçon déformé du tronçon de rivet (28) s'engage au moins localement derrière la pièce à oeuvrer (42) sur un côté détourné d'un côté d'insertion par lequel l'unité de fixation (10) est insérée dans la pièce à oeuvrer (42),
en particulier, l'élément de déformation (14) s'appuie dans la direction axiale contre la pièce à oeuvrer (42), en particulier à une extrémité de l'élément de déformation (14) détournée du tronçon de déformation (16).

11. Pièce d'assemblage selon la revendication 10,
dans laquelle l'élément de déformation (14) s'étend à travers une cavité de la pièce à oeuvrer (42),
en particulier, la pièce à oeuvrer (42) est un profilé creux.

12. Pièce d'assemblage selon l'une des revendications 10 et 11,
dans laquelle la pièce à oeuvrer (42) présente une ouverture préfabriquée (44) destinée à recevoir l'unité de fixation (10), ou
un pion découpé dans la pièce à oeuvrer (42) par l'unité de fixation (10) est pincé entre l'unité de fixation (10) et la pièce à oeuvrer (42).

13. Pièce d'assemblage selon l'une des revendications 10 à 12,
dans laquelle la butée est réalisée sur la pièce à oeuvrer (42).

14. Procédé de fabrication d'une pièce d'assemblage selon l'une des revendications 10 à 13, comprenant les étapes consistant à :
- fournir une pièce à oeuvrer (42) pré-perforée ou non,
- fournir une unité de fixation (10) selon l'une des revendications 1 à 9,
- insérer l'unité de fixation (10) dans la pièce à oeuvrer (42) de telle sorte que le tronçon d'appui coopère avec une butée pour provoquer un mouvement relatif entre l'élément formant rivet (12) et l'élément de déformation (14) et ainsi une déformation du tronçon de rivet (28) dans une direction radiale.

15. Procédé selon la revendication 14,
dans lequel l'unité de fixation (10) est insérée dans la pièce à oeuvrer (42) par un mouvement d'insertion axial en une seule passe, et est fixée à celle-ci, et/ou
l'insertion de l'unité de fixation (10) dans la pièce à oeuvrer (42) et la fixation de l'unité de fixation (10) à la pièce à oeuvrer (42) sont engendrées par des composantes de mouvement de même direction,
en particulier, les composantes de mouvement se confondent mutuellement.
